# EUROPÄISCHE PATENTSCHRIFT

(11) **EP 0 609 677 B1**
(45) Veröffentlichungstag und Bekanntmachung des Hinweises auf die Patenterteilung: **17.07.1996**
(21) Anmeldenummer: 94100465.7
(22) Anmeldetag: 14.01.1994
(51) Int. Cl.: B60J 1/02

(54) **Halteelement zum vertikalen Fixieren einer in einen Fensterrahmen eines Kraftfahrzeuges einklebbaren Glasscheibe**
Supporting element for the vertical fixation of a glasspane to be glued in a window frame of a motorvehicle
Support pour la fixation verticale d'une vitre destinée à être collée dans la baie de fenêtre d'une véhicule

(30) Priorität: 30.01.1993 DE 4302662
(43) Veröffentlichungstag der Anmeldung: 10.08.1994
(73) Patentinhaber: A. Raymond GmbH & Co. KG, D-79539 Lörrach (DE)
(72) Erfinder: Weber, Eduard-Johann, D-63329 Egelsbach (DE); Schweizer, Karl-Heinz, D-79541 Lörrach-Brombach (DE); Lesser, Hans-Jürgen, D-79618 Rheinfelden (DE)
(74) Vertreter: Kirchgaesser, Johannes, Dipl.-Ing.

(56) Entgegenhaltungen:
- EP-A- 0 230 837
- EP-A- 0 501 128
- EP-A- 0 511 532

## Beschreibung

Die Erfindung bezieht sich auf ein Halteelement zum vertikalen Fixieren einer in einen Fensterrahmen eines Kraftfahrzeuges einklebbaren Glasscheibe gemäß dem Oberbegriff des Anspruchs 1.

Derartige Glasscheiben werden üblicherweise automatisch mit einem Freiarm-Roboter eingesetzt. Die Scheiben müssen dabei mit einem vorbestimmten Abstand zum Fensterrahmen plaziert und bis zum Abbinden des Klebers durch Halteelemente fixiert werden.

Die Erfindung geht aus von einem durch die EP 0 230 837 B1 bekannten Halteelement, bei welchem in dichten Abständen übereinander angeordnete, balkenförmige Stützstufen über elastisch zusammendrückbare Federbeine einstückig mit dem Halteteil verbunden sind. Hierbei ruht die Scheibe nach ihrer Plazierung auf den jeweils unter der Scheibenkante befindlichen Stützbalken, während die oberhalb der unteren Scheibenkante befindlichen Stützbalken von der Scheibe bei deren Montage weggedrückt werden.

Beim Plazieren der Scheibe durch den Roboter ergeben sich jedoch häufig Toleranzabweichungen zum Fensterrahmen, welche über eine Nachjustierung der bereits an die Klebemasse angedrückten Scheibe ausgeglichen werden müssen. Dies erfordert eine nachträgliche Verschiebung der Scheibe in der Einbauebene, wobei die Scheibenoberkante auf ein bestimmtes, vorgegebenes Maß zum oberen Querrahmen ausgerichtet werden muß.

Bei dem bekannten Halteelement läßt sich die Scheibenlage nach unten leicht korrigieren, indem die Balken, die der Ausgleichsbewegung im Wege sind, nachträglich von Hand eingedrückt werden. Beim Ausrichten der Scheibe nach oben hingegen kann der unterste, von der Scheibenkante eingedrückte Stützbalken aufgrund der Rückstellkraft der Federbeine wieder unter die Scheibenkante zurückfedern und so die Scheibe in der neueingestellten Höhe unterstützen.

Dieses Halteelement weist jedoch verschiedene Nachteile auf. Zum einen ergibt die aus baulichen Gründen erforderliche Dicke der Stützbalken eine zu grobe Abstufung zwischen den einzelnen Stützflächen und zum anderen ist zwischen den einzelnen Stützbalken aus entformungstechnischen Gründen ein gewisser Abstand erforderlich, welcher beim Einsatz des Halteelements von der abzustützenden Scheibe erst weggedrückt werden muß, bevor der Abstützungseffekt erreicht wird. Je höher die untere Scheibenkante zu positionieren ist, umso mehr Stützbalken müssen aufeinandergedrückt werden und umso tiefer rutscht die Scheibe nach unten, bis alle Balken fest aufeinanderliegen. Damit ist die Positionierung für die Praxis zu ungenau.

Angesichts der vorgenannten Nachteile und der Tatsache, daß die Stützfunktion des Halteelements nur solange benötigt wird, bis der Kleber ausgehärtet ist, wird die Aufgabe der Erfindung darin gesehen, das eingangs erwähnte Halteelement so zu gestalten, daß eine feinere Abstufung zwischen den einzelnen Stützflächen erreicht und das Nachgeben der Stützflächen bei Belastung durch die Scheibe vermieden wird.

Diese Aufgabe wird nach der vorliegenden Erfindung dadurch gelöst, daß die Stützstufen über jeweils einen Steg abwechselnd auf der einen und anschließend auf der anderen Seite des Stützbereiches mit dem Halteteil verbunden sind, wobei die Stützstufen einer der Seiten separat am Halteteil anbringbar sind und spielfrei zwischen die Stützstufen der anderen Seite eingreifen.

Hierdurch wird eine lamellenartige Ausbildung der Stützstufen ermöglicht mit dem Vorteil, daß das Halteelement besonders flach ausgebildet werden kann und damit nur wenig Platz im unteren Querrahmen einnimmt.

Durch die Ausgestaltung der Erfindung nach Anspruch 2 lassen sich die ineinandergreifenden Stützstufen in einer einzigen Gießform zwar räumlich getrennt, jedoch über Abreißstege einstückig verbunden abspritzen und dann zusammenführen, wobei durch die Anwendung der Merkmale des Anspruchs 3 das separate Trägerstück sich schnell und einfach in die entsprechende Aussparung des Halteteils unmittelbar nach dem Abspritzen eindrücken läßt.

In der Zeichnung ist ein bevorzugtes Ausführungsbeispiel der Erfindung dargestellt und soll nachfolgend näher erläutert werden. Es zeigt
- Fig. 1: das Halteelement in Vorderansicht,
- Fig. 2: einen Längsschnitt durch das Halteelement gemäß Linie II - II in Figur 1,
- Fig. 3: eine Seitenansicht des Halteelements in Richtung des Pfeiles "P",
- Fig. 4: ein separates Trägerstück mit angeformten Stützstufen,
- Fig. 5: ein im Fensterrahmen eines Kraftfahrzeuges eingebautes Halteelement beim Andrücken der Scheibe,
- Fig. 6: das gleiche, eingebaute Halteelement nach dem Andrücken der Scheibe und
- Fig. 7: das gleiche, eingebaute Halteelement nach dem Ausrichten der Scheibe in Richtung des Pfeiles "A".

Das in den Figuren dargestellte Halteelement dient zum vertikalen Fixieren von im Rahmen eines Kraftfahrzeuges einklebbaren Glasscheiben wie Windschutzscheiben oder Heckscheiben , wobei das Halteelement die Scheibe nur solange stützen muß, bis die Klebeverbindung zwischen Scheibe und Fensterrahmen ausgehärtet ist.

Das Halteelement besteht aus einem im unteren Querrahmen 14 einsetzbaren Halteteil 1 aus hartelastischem Kunststoff und einer Anzahl von mit diesem verbundenen, in den Stützbereich 5 ragenden Stützstufen 2 und 3 mit in gleichen Abständen "s" übereinander angeordneten Stützflächen 4.

Die einzelnen Stützstufen 2 und 3 sind hierbei lamellenartig ausgebildet und greifen im Stützbereich 5 sich kreuzend ineinander, so daß sie in diesem Bereich 5 fest aufeinanderliegen. Die Stützlamellen 2 und 3 sind jeweils an ihrem einem Ende über elastisch nachgiebige Stege 6 und 7 beiderseits des Stützbereiches 5 mit dem Halteteil 1 verbunden, und zwar derart, daß die Verbindungsstege 6 und 7 abwechselnd auf der einen und auf der anderen Seite des Stützbereiches 5 angeordnet sind.

Die Verbindungsstege 6 der Stützstufen 2 sind hierbei auf einer Seite des Stützbereiches 5 direkt am Halteteil 1 angeformt. Die Verbindungsstege 7 der Stützstufen 3 sind dagegen auf der anderen Seite des Stützbereiches 5 an einem separaten Trägerstück 8 angeformt, welches in eine Aussparung 9 des Halteteils 1 einführbar und dort festlegbar ist, und zwar derart, daß die angeformten Stützlamellen 3 in die Zwischenräume der anderen, direkt am Halteteil 1 angeformten Stützlamellen 2 eingreifen und diese voll ausfüllen.

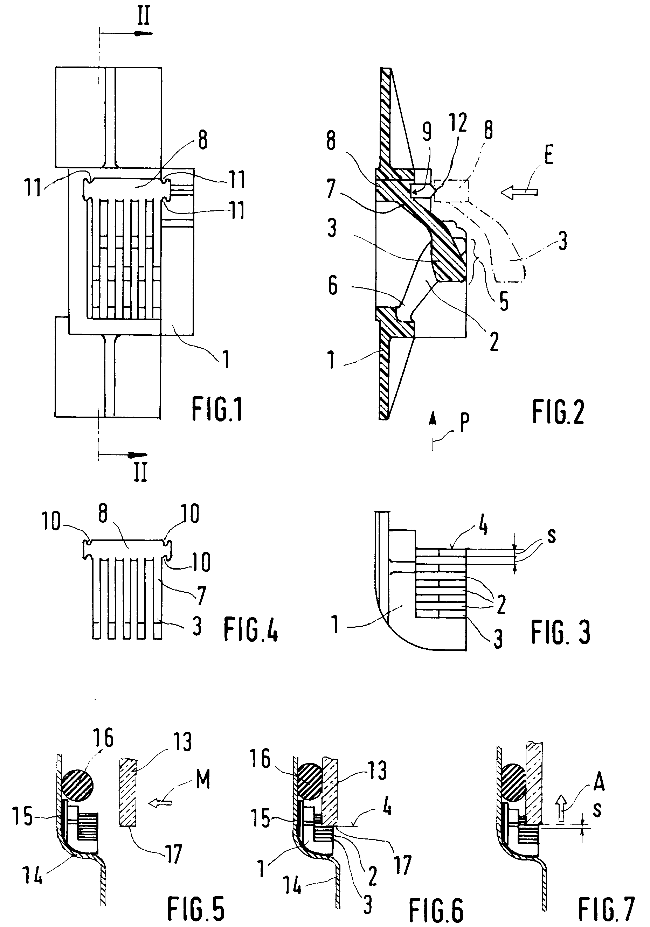

Das Trägerstück 8 ist, wie aus Figur 4 ersichtlich, an seinen Enden, d.h. beiderseits der Verbindungsstege 7, mit Nuten 10 versehen, welche parallel zur Lamellenebene, und zwar in Einführrichtung des Pfeiles "E"(Fig.2) verlaufen.

Dementsprechend weist die Aussparung 9 im Halteteil 1 nachinnen abstehende Federn 11 auf, über welche das Trägerstück 8 mit den Nuten 10 verschiebbar ist.

Hierbei ist zu beachten, daß das Trägerstück 8 mit den Lamellen 3 sich bei der Herstellung in der nicht dargestellten Gießform räumlich vor der Aussparung 9 des Halteteils 1 befindet und mit sogenannten Abreißstegen 12 mit diesem verbunden ist (Fig.2). Nach dem Abspritzen des gesamten Halteelements wird das Trägerstück 8 in Richtung des Pfeiles "E" in die Aussparung 9 eingeschoben, wobei die Stützlamellen 3 sich "kämmend" in die am Halteteil 1 angeformten Stützlamellen 2 einfügen.

In den Figuren 5 bis 7 ist die Funktion des Halteelements anschaulich dargestellt. In Figur 5 befindet sich die zu fixierende Glasscheibe 13 unmittelbar vor dem Halteelement, welches im unteren Querrahmen 14 mit Hilfe eines doppelseitigen Klebebandes 15 eingeklebt ist. Oberhalb des Halteelements ist im Querrahmen 14 ein Klebestreifen 16 angebracht, gegen welchen die Glasscheibe 13 in Richtung des Pfeiles "M" angedrückt wird. Hierbei werden die oberen Lamellenstufen 2 und 3 vom unteren Scheibenrand 17 nach hinten weggedrückt, während die darunter befindlichen Lamellenstufen 2 und 3 inihrer ursprünglichen Stützlage verharren.

Figur 6 zeigt die Montagesituation nach dem Andrücken der Glasscheibe 13, wobei der untere Scheibenrand 17 auf den verbliebenen Lamellenstufen 2, 3 abgestützt ist.

In Figur 7 ist die Glasscheibe 13 beim Ausrichten etwas in Pfeilrichtung "A" angehoben worden, wobei die oberste, bereits weggedrückte Stützlamelle 3 aufgrund der Federkraft des Verbindungssteges 7 wieder unter den Scheibenrand 17 zurückgefedert ist, so daß die Scheibe 13 nunmehr in der angehobenen Position bis zum Aushärten des Klebestreifens 16 gehalten wird.

## Patentansprüche

1. Halteelement zum vertikalen Fixieren einer in einen Fensterrahmen eines Kraftfahrzeuges einklebbaren Glasscheibe, bestehend aus einem in den unteren Fensterrahmenabschnitt einsetzbaren, parallel zur Scheibeninnenfläche verlaufenden Halteteil aus hartelastischem Kunststoff, von dem eine Anzahl von Stützstufen abstehen, die über elastisch nachgiebige Stege mit dem Halteteil verbunden und in gleichen Abständen in der vertikalen Stützrichtung übereinander angeordnet sind, wobei die Stützstufen oberhalb der unteren Scheibenkante von der Scheibe bei deren Montage weggedrückt werden und die darunter liegenden Stützstufen als ein durchgehendes Distanzstück zwischen der Scheibenunterkante und dem unteren Fensterrahmenabschnitt wirksam sind,
**dadurch gekennzeichnet,** daß die Stützstufen (2,3) über jeweils einen Steg (6,7) abwechselnd auf der einen und anschließend auf der anderen Seite des Stützbereiches (5) mit dem Halteteil (1) verbunden sind, wobei die Stützstufen (3) einer der Seiten separat am Halteteil (1) anbringbar sind und spielfrei zwischen die Stützstufen (2) der anderen Seite eingreifen.

2. Halteelement nach Anspruch 1, dadurch gekennzeichnet, daß die Stege (6) auf der einen Seite des Stützbereichs (5) direkt am Halteteil (1) angeformt sind, während die Stege (7) auf der anderen Seite des Stützbereichs (5) an einem separaten Trägerstück (8) angeformt sind, welches in eine entsprechende Aussparung (9) im Halteteil (1) einführbar und festlegbar ist.

3. Halteelement nach Anspruch 2, dadurch gekennzeichnet, daß das Trägerstück (8) an seinem oberen und unteren Ende mit Nuten (10) versehen ist, die parallel zu den Ebenen den Stützstufen (2, 3) sowie in der Einführrichtung (E) - nämlich senkrecht zur Halteteilebene - verlaufen, und daß in die Nuten (10) Federn (11) eingreifen, welche von dem Halteteil (1) in die Aussparung (9) abstehen.

## Claims

1. A holding element for vertically fixing a glass pane which can be glued into a window frame of a motor vehicle, comprising a holding portion of hard-elastic plastics material which can be fitted into the lower window frame portion and which extends parallel to the inside surface of the pane and from which there project a number of support steps which are connected to the holding portion by way of elastically flexible limbs and are arranged at equal spacings in the vertical support direction in mutually superposed relationship, wherein the support steps above the lower edge of the pane are pressed away by the pane upon fitting thereof and the support steps which are disposed therebeneath are effective as a continuous spacer portion between the lower edge of the pane and the lower window frame portion, characterised in that the support steps (2, 3) are connected to the holding portion (1) by way of respective limbs (6, 7) alternately on one side and then on the other side of the support region (5), wherein the support steps (3) on one of the sides can be provided separately on the holding portion (1) and engage without play between the support steps (2) of the other side.

2. A holding element according to claim 1 characterised in that the limbs (6) on the one side of the support region (5) are formed directly on the holding portion (1) while the limbs (7) on the other side of the support region (5) are formed on a separate carrier portion (8) which can be inserted into and fixed in a corresponding opening (9) in the holding portion (1).

3. A holding element according to claim 2 characterised in that at its upper and lower ends the carrier portion (8) is provided with grooves (10) which extend parallel to the planes of the support steps (2, 3) and in the insertion direction (E) - namely perpendicularly to the plane of the holding portion - and that ribs (11) which project from the holding portion (1) into the opening (9) engage into the grooves (10).

## Revendications

1. Support pour la fixation verticale d'une vitre destinée à être collée dans la baie de fenêtre de véhicule, se composant d'un élément de retenue en matière plastique à cédage élastique dur, disposé parallèlement à la surface intérieure de la vitre , destiné à être monté dans la partie inférieure de la baie de fenêtre, duquel font saille un certain nombre de gradins d'appui, qui sont relié à l'élément de retenue par l'intermédiaire de barrettes entretoises capables de se déformer élastiquement et sont disposés l'un au dessus de l'autre, dans le sens d'appui vertical, avec un intervalle d'écartement identique, les gradins d'appui se trouvant au-dessus du bord inférieur de la vitre étant en l'occurrence, lors du montage de cette dernière, repoussés vers l'extérieur et les gradins d'appui se trouvant sous celle-ci faisant office de pièce d'écartement continue entre le bord inférieur de la vitre et la partie inférieure de la baie de fenêtre, **se cara ctérisant par le fait** que les gradins d'appui (2,3) sont reliés à l'élément de retenue (1) respectivement par l'intermédiaire d'une barrette entretoise (6,7) alternativement sur un côté puis sur l'autre côté de la plage d'appui (5), les gradins d'appui (3) d'un des côtés pouvant être en l'occurrence appliqués séparément sur l'élément de retenue (1) et s'encastrent en prise sans jeu entre les gradins d'appui (2) de l'autre côté.

2. Support selon la revendication 1, se caractérisant par le fait que les barrettes entretoises (6) sur un côté de la plage d'appui (5) sont réalisées solidaires par moulage de l'élément de retenue (1), tandis que les barrettes entretoises (7) de l'autre côté de la plage d'appui (5) sont réalisées solidaires par moulage d'un élément support (8), qui est destiné à être introduit et bloqué dans un évidement (9) correspondant de l'élément de retenue (1).

3. Support selon la revendication 2, se caractérisant par le fait que l'élément support (8) comporte à ses extrémités supérieure et inférieure des rainures (10), qui sont disposées parallèlement aux plans des gradins d'appui (2,3) ainsi que dans le sens d'introduction (E), c'est à dire verticalement par rapport au plan de l'élément de retenue et que dans ces rainures (10) viennent s'encastrer des ressorts (11), qui depuis l'élément de retenue (1) font saillie dans l'évidement (9).
